# EUROPÄISCHE PATENTSCHRIFT

(11) **EP 0 835 831 B1**
(45) Veröffentlichungstag und Bekanntmachung des Hinweises auf die Patenterteilung: **09.12.1998**
(21) Anmeldenummer: 97107589.0
(22) Anmeldetag: 07.05.1997
(51) Int. Cl.: B65G 47/84, B65B 35/26

(54) **Rotations-Transportvorrichtung zur Weitergabe von Gegenständen**
Rotary transport device for transferring articles
Dispositif de transport rotatif pour le transfert d'articles

(30) Priorität: 08.05.1996 DE 19618510
(43) Veröffentlichungstag der Anmeldung: 15.04.1998
(73) Patentinhaber: Pactec Verpackungsmaschinen-Fabrik Theegarten GmbH & Co. KG, 01237 Dresden (DE)
(72) Erfinder: Kmoch, Werner, 01237 Dresden (DE); Girndt, Wolfgang, 01705 Freital (DE)
(74) Vertreter: Grünecker, Kinkeldey, Stockmair & Schwanhäusser Anwaltssozietät

(56) Entgegenhaltungen:
- EP-A- 0 509 293
- EP-A- 0 787 667
- DE-B- 1 254 082
- FR-A- 2 529 179
- GB-A- 1 432 371
- GB-A- 2 200 612

## Beschreibung

Die Erfindung betrifft eine Rotations-Transportvorrichtung zur Weitergabe von kleinstückigen Gegenständen für Verpackungsmaschinen, mit einem um eine stationäre Achse rotierbaren Grundgehäuse, das eine Mehrzahl von Haltebackenpaaren zur Aufnahme eines Gegenstandes zwischen opponierend entlang einer Haltebackenachse bewegbaren Haltebacken eines Haltebackenpaares trägt, wobei jedes Haltebackenpaar um eine im wesentlichen parallel zur stationären Achse verlaufende Schwenkachse schwenkbar und eine Bewegungssteuereinrichtung für die Haltebackenpaare in Verbindung mit einer auf der stationären Achse aufgenommenen Steuerkurvenanordnung vorgesehen ist.

Für die Verpackung kleinstückiger Gegenstände, z.B. von Süßwaren wie Bonbons (z.B. Weich- oder Hartkaramellen) ist es bekannt, z.B. zum Einzelverpacken dieser Gegenstände, diese auf der Grundlage eines Rotations-Transportprinzips durch die Verpackungsmaschine zu bewegen. Hierbei werden z.B. von einem Massestrang abgetrennte Bonbons zunächst von einem Greiferrad ergriffen und unter Rotation desselben an ein mit gleichem Wirkumfang versehenes Übergaberad übergeben, das seinerseits unter Geschwindigkeitsausgleich die Gegenstände an ein Einwickelrad weitergibt (WO-A-93/10005). Zum Ausgleich von Geschwindigkeitsdifferenzen ist es bei derartigen, rotierenden Trägern wie Greifer- oder Übergaberädern für solche Verpackungsmaschinen bekannt, die außenliegende Haltebacke eines Haltebackenpaares zur Steuerung ihrer Axial- sowie Pendelbewegung um eine zur Zentralachse parallele Schwenkachse an einer Welle drehfest festzulegen, die axial verschiebbar in einer Hohlwelle bzw. Hülse gelagert ist. Die Hohlwelle bzw. Hülse trägt drehfest die innere Haltebacke des Haltebackenpaares und ist in dem Gehäuse des um die stationäre Mittelachse rotierenden Greifer- oder Übergaberades schwenkbar angeordnet. Die Welle erhält ihre Axialbewegung zum Öffnen und Schließen des Haltebackenpaares durch Abtasten einer stationären Steuerkurve. Die Schwenkbewegung für die innere, mit der äußeren Haltebacke verbundene Welle wird ebenfalls über die Schwenksteuereinrichtung für die Schwenkbewegung der Hohlwelle bzw. Hülle für die innere Haltebacke abgeleitet (DE-A-3820139, WO-A-93/25440).

Derartige, auf dem "Rotationsprinzip" der Übergabeorgane aufgebaute Verpackungsmaschinen, insbesonder Bonbonsverpackungsmaschinen, können im Hochleistungsbereich mit Verpackungsgeschwindigkeiten von bis zu ca. 1.500 Stück pro Minute arbeiten und sind außerordentlich effizient. Schwierigkeiten bereitet bei derartigen Hochleistung-Verpackungsmaschinen die gleichermaßen wirtschaftliche weitere Prozeßgestaltung für die Weiterverarbeitung z.B. von zu Stangen abgepackten Gegenständen, die eine vorherige Guppenbildung der zunächst einzeln gehandhabten und gegebenenfalls auch bereits verpackten Gegenstände, erfordert. Hierbei ist insbesondere eine hohe Variabilität im Hinblick auf die Position der Bereitstellung der von der rotierenden Vorrichtung abgegebenen Gegenstände wünschenswert.

Aus der DE-B-12 54 082 ist eine Vorrichtung zum Stapeln von plattenförmigen Formkörpern in Hochkantstellung bekannt. Hierbei wird zwar in schwenkbarer Greifer verwendet, eine Verpackung der Formkörper ist hierbei aber nicht vorgesehen.

Aus der GB-A-1 432 271 ist eine Sammelvorrichtung bekannt, bei der Artikel schwenkbar erfaßt und in gesammelten Einheiten weitergefördert werden.

Der Erfindung liegt die Aufgabe zugrunde, eine Rotations-Transportvorrichtung der eingangs genannten Art zu verbessern, derart, daß bei Beibehaltung der bisherigen Vorteile hinsichtlich einer Geschwindigkeitsanpassung der Haltebackenpaare an stromaufseitige Zuförder- oder stromabseitige Abförderorgane eine Lageveränderung der Gegenstände in bezug auf die umlaufende Transportvorrichtung möglich sein soll, so daß die Gegenstände z.B. in einer ersten Orientierung aufgenommen und in einer zweiten Orientierung abgegeben werden können.

Diese Aufgabe wird bei einer Rotations-Transportvorrichtung der vorgenannten Art erfindungsgemäß dadurch gelöst, daß zumindest eine der Haltebacken jedes Haltebackenpaares relativ zu der Schwenkachse um die Haltebackenachse drehbar ist.

Durch die erfindungemäße Lösung ist es möglich, eine zusätzlich zur gemeinsamen Schwenksteuerung jedes beweglich an dem umlaufenden Träger gelagerten Haltebackenpaares, den Haltebacken selbst eine unabhängige Rotationsbewegung zu ermöglichen, die es gestattet, während des Transportes des Gegenstandes durch die Transportvorrichtung selbst, die z.B. ein Übergabekopf einer Verpackungsmaschine sein kann, den Gegenstand um seine Lagerungsachse, z.B. von einer Flachposition in eine Hochkantposition oder umgekehrt zu verdrehen und auf diese Weise den Gegenstand in geeigneter Weise, z.B. für eine anschließende Gruppen- oder Stangenbildung abzugeben.

Grundsätzlich kann es ausreichend sein, eine der Haltebacken jedes opponierend axial und schwenkbar beweglichen Haltebackenpaares um die Haltebackenachse drehbar auszulegen, z.B. dann, wenn diese drehbare Haltebacke einen signifikant höheren Reibschluß oder anderweitige Formerfassung des Gegenstandes, z.B. durch spezielle Gestaltung des Spitzenendes dieser Haltebacke, aufweist. Im allgemeinen wird es vorteilhaft sein, beide Haltebacken jedes Haltebackenpaares sowohl opponierend axial relativ zueinander verschiebbar wie auch gemeinsam um eine Schwenkachse parallel zur stationären Achse der Vorrichtung schwenkbar anzusteuern und auch beide Haltebacken selbst synchron um die Haltebackenachse drehbar auszuführen.

Nach einem bevorzugten Ausführungsbeispiel der Erfindung sind die Haltebacken mit einem Zahnsegment drehfest verbunden, vorzugsweise integral einstückig mit diesem am Umfang versehen, und ist mit diesem Zahnsegment ein Gegen-Zahnsegment der Bewegungssteuereinrichtung in Kämmeingriff.

Eine vorteilhafte Gestaltung ist dadurch gegeben, daß das Grundgehäuse eine Mehrzahl von um die jeweilige Schwenkachse schwenkbarer Schwenkgehäuse lagert, in denen beiderseits einer Radialebene je eine Haltebacke eines Haltebackenpaares um die Haltebackenachse drehbar gelagert ist.

Vorzugsweise ist für jedes Haltebackenpaar ein Paar beabstandeter Gegen-Zahnsegmente in Kämmeingriff mit den Zahnsegmenten des Haltebackenpaares vorgesehen und die Gegen-Zahnsegmente sind um die Schwenkachse des Haltebackenpaares, die zugleich die Schwenkachse des Schwenkgehäuses ist, schwenkbar.

Vorzugsweise wird die Schwenkachse der Haltebackenpaare (zugleich Schwenkachse jedes Schwenkgehäuses) durch eine Welle gebildet, auf der ein Gegen-Zahnsegment drehfest zum Eingriff mit der einen Haltebacke aufgenommen ist, während das Gegen-Zahnsegment zum Eingriff mit der anderen Haltebacke des Haltebackenpaares drehfest mit einer die Welle konzentrisch umgebenden Hülse verbunden ist.

Vorzugsweise sind die Haltebacken mit den Zahnsegmenten durch die Gegen-Zahnsegmente für die Drehsteuerung der Haltebacken auch axial opponierend verschiebbar, wobei zu diesem Zweck der Verzahnungseingriff zwischen den Zahnsegmenten der Haltebacken und den Gegen-Zahnsegmenten der Drehbetätigungsvorrichtung für die Haltebacken in einem Käfig gefangen ist, der durch seitlich angeordnete Überdeckungsplatten gebildet ist.

Zur Einstellung der Drehbewegung der Haltebacken, d.h. z.B. bei der Handhabung von prismatischen Gegenständen wie prismatischen Weichkaramellen, zur Vorwahl einer Aufnahme, z.B. im Flachformat und Weitergabe im Hochkantformat (oder umgekehrt), ist vorzugsweise die stationäre Achse mit der Steuerkurvenanordnung für die Bewegungssteuerung der Haltebackenpaare und der Schwenkgehäuse um 180° verdrehbar. Die Steuerkurvenanordnung besteht vorzugsweise aus einer Mehrzahl von drehfest mit der stationären Achse verbundenen Kurvenscheiben.

Nach noch einer weiteren, bevorzugten Ausführungsform der Erfindung erfolgt eine axiale Verschiebung der Haltebacken opponierend zueinander zum Ergreifen bzw. Lösen des Gegenstandes von je einer Stirnkurve über einen verschiebungsfest gelagerten Hebel, während eine, der axialen Verschiebung der Haltebacken vorzugsweise überlagerte Drehbewegung um die Haltebackenachse von einer Nutkurve über einen drehbar gelagerten Hebel steuerbar ist, wobei die Schwenkbewegung sowohl für die innenliegende als auch die außenliegende Haltebacke des Haltebackenpaares hiervon gemeinsam abgeleitet wird.

Zur Erhöhung der Zuverlässigkeit und Sicherheit bei der Abgabe des Gegenstandes von der Transportvorrichtung, z.B. an einen nachgeordneten Stapelbandförderer zur Bildung einer Gruppe der durch die Transportvorrichtung zunächst einzeln transportierten Gegenstände, ist vorzugsweise für jedes Schwenkgehäuse ein Haltefinger zur Abstützung des Gegenstandes vorgesehen, wobei der Haltefinger vorzugsweise etwa im Bereich der Radialebene angeordnet ist und zur Synchronbewegung mit dem Schwenkgehäuse durch eine Nutkurve über einen drehbar gelagerten Hebel steuerbar ist. In diesem Zusammenhang ist ein mit dem Grundgehäuse umlaufendes Haltefinger-Gehäuse für einen Antrieb des Haltefingers vorzugsweise gegenüberliegend zu dem die Bewegungssteuereinrichtung für die Haltebackenpaare sowie für die Schwenksteuerung der Schwenkgehäuse aufnehmenden Grundgehäuse angeordnet, mit den Schwenkgehäusen zwischen Grundgehäuse und Haltefinger-Gehäuse.

Eine bevorzugte Verwendung findet die erfindungsgemäße Transportvorrichtung als Übergabekopf zur Aufnahme verpackter, einzelner Gegenstände von einem vorgeschalteten, synchron mit der Umlaufgeschwindigkeit des Übergabekopfes umlaufenden Packkopfes und zur, insbesondere um 90° gegenüber einer Aufnahmeposition verdrehten Weitergabe der Gegenstände an einen die einzelnen Gegenstände zu Gruppen zusammenordnenden Stapelbandförderer.

Die Erfindung wird nachstehend anhand eines Ausführungsbeispieles und zugehöriger Zeichnungen erläutert. In diesen zeigen:
- Fig. 1: einen Längsschnitt durch einen Übergabekopf in einer Bonbon-Verpackungsmaschine,
- Fig. 2: eine Teilschnitt-Darstellung entlang einer Linie A-A nach Fig.1,
- Fig. 3: eine Teilschnitt-Darstellung entlang einer Linie B-B nach Fig. 1,
- Fig. 4: eine Teilschnitt-Darstellung entlang einer Linie C-C nach Fig.1,
- Fig. 5: eine Teilschnitt-Darstellung entlang einer Linie D-D nach Fig. 1,
- Fig. 6: eine Teilschnitt-Darstellung entlang einer Linie E-E nach Fig.1,
- Fig. 7: eine Teilschnitt-Darstellung entlang einer Linie F-F nach Fig. 1,
- Fig. 8: eine Teilschnitt-Darstellung entlang einer Linie G-G nach Fig.1,
- Fig. 9: eine Ansicht ähnlich derjenigen in Fig. 2 für eine einzelne Haltebacke (äußere Axialansicht), und
- Fig. 10: eine Prinzipdarstellung des Einsatzes des Übergabekopfes nach den Fig. 1 - 9 in einem Verpackungsmaschinen-System, und
- Fig. 11: eine schematische Darstellung für den Bewegungsablauf bei der Bildung der Gruppierung an der Übergabestelle zwischen Übergabekopf und Stapelbandförderer für die Herstellung von Hochkantpackungen (Fig. 11a) und Flachpackungen (Fig. 11b).

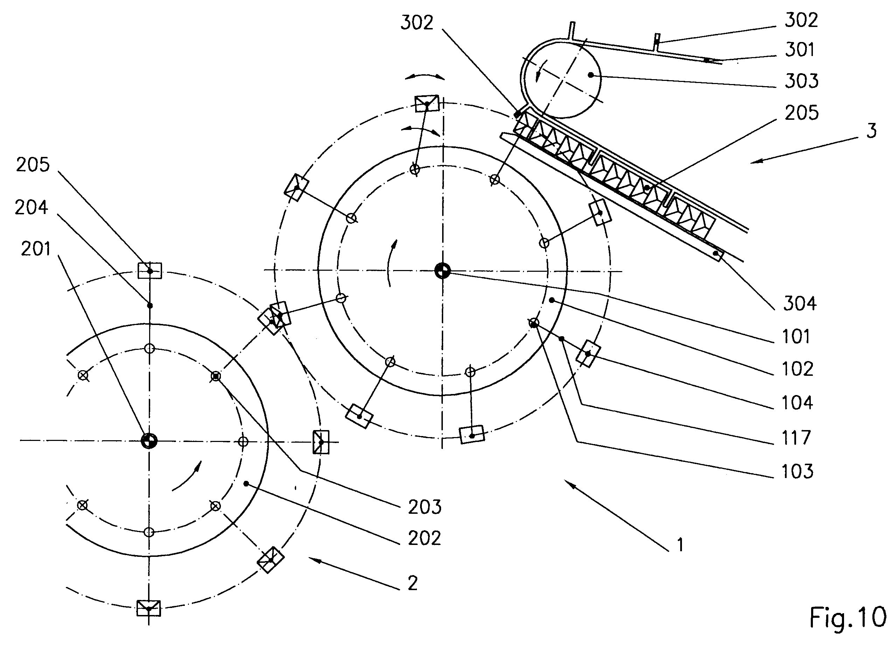

Bezugnehmend zunächst auf Fig. 10 wird der Einsatz eines Übergabekopfes 1 schematisch in einem Verpackungsmaschinen-System erläutert, das für die Verpackung von Bonbons 205 von prismatischer Geometrie, z.B. von Weichkaramellen vorgesehen ist, ohne daß das Ausführungsbeispiel auf derartige Produkte beschränkt wäre.

In derartigen Verpackungsmaschinen können einzelne, z.B. von einem kontinuierlichen Massestrang abgetrennte Bonbonstücke nach Aufnahme und Zuförderung über ein hier nicht dargestelltes Greiferad und Übergaberad (wie dies aus der WO-A-93/25440 bekannt ist), zu einem umlaufenden Packkopf 2 gefördert, der hinsichtlich seiner Bewegungsmechanik mit einem ähnlichen Grundaufbau wie der Übergabekopf 1 versehen ein um eine stationäre Achse 201 rotierendes Gehäuse 202 aufweist, an dem um Schwenkachsen 203 schwenkbar jeweils ein Packbackenpaar 204 gelagert ist, das das Bonbonstück aufnimmt und unter Zuführung eines Packmaterialabschnittes das Bonbonstück zu dem einzelverpackten Bonbon 205 verpackt, ohne daß dies hier im einzelnen dargestellt wäre.

Vielfach besteht der Wunsch, derartige, einzelverpackte Kleinartikel, wie die Bonbons 205 anschließend in Stangen abzupacken, wie dies auch für Weichkaramellen oder andere Süßigkeiten (z.B. Kaugummis) bekannt ist. Hierzu ist es erforderlich, die Einzelstücke der einzeln verpackten Bonbons 205 zu Gruppen zusamnmenzuordnen, um sie sodann einem (hier ebenfalls hier nicht dargestellten) Stangenpacker zuzuführen. Hierzu ist der Übergabekopf 1 nach dem vorliegenden Ausführungsbeispiel vorgesehen, der, stromab des Packkopfes 2 und stromauf eines Stapelbandförderers 3 angeordnet, ebenfalls ein um eine stationäre Achse 101 rotierendes Gehäuse 102 aufweist, an dem um Schwenkachsen 103 schwenkbar gelagert Haltebackenpaare 104 schwenkbar gelagert sind, die 90° gedreht in Bezug auf die Orientierung der Packbackenpaare 204 des Packkopfes 2 angeordnet zur Aufnahme der einzelverpackten Bonbons 205 von dem mit gleicher Umlaufgeschwindigkeit, jedoch mit entgegengesetztem Drehsinn umlaufenden Packkopf 2 und zur Abgabe an einen Stapelbandförderer 3 vorgesehen sind, der mit wesentlich geringerer Fördergeschwindgkeit (ca. 1/3 der Umlaufgeschwindigkeit des rotierenden Gehäuses 102 des Übergabekopfes 1 die einzelverpackten Bonbons gruppenweise (hier z.B. in Gruppen zu je 5 Stück und in Hochkant-Ablage) zusammenordnet. Für ein reibungsloses Arbeiten ist eine Anpassung der Umlaufgeschwindigkeit des jeweiligen Haltebackenpaares mit dem einzelverpackten Bonbon 205 an die Fördergeschwindigkeit des gruppenbildenden Stapelbandförderers 3 erforderlich, wobei dies durch Schwenkgehäuse 117, d.h. durch die um die Drehachse 103 schwenkbare Anlenkung der Haltebackenpaare 104 erfolgt. Zur Bildung der Gruppen weist der Stapelbandförderer 3 ein Stapelband 301 mit Mitnehmern 302 auf, wobei das Stapelband über eine Umlenkwalze 303 geführt wird und im Bereich der Aufnahme der Bonbons 205 von dem Übergabekopf 1 sowie zum Weitertransport der Bonbon-Gruppen ein Gegenlager 304 aufweist.

Eine wesentliche Voraussetzung für die Gruppenbildung der einzelverpackten Bonbons 205 am Stapelbandförderer 3 ist in diesem Ausführungsbeispiel die mit der jeweiligen Schmalseite der verpackten Bonbons 205 nach oben zum Stapelband 301 bzw. zum Gegenlager 304 gerichtete Aufnahme, die durch den Übergabekopf 1 gewährleistet werden muß, wobei die einzelverpackten Bonbons 205 zunächst in einer hierzu um 90° versetzten Flachlage von dem Packkopf 2 übernommen werden.

Auf dem Wege von der Aufnahme der Bonbons 205 von dem Packkopf 2 durch die Haltebackenpaare 104 des Übergabekopfes 1 bis zur Abgabe an den Stapelbandförderer 3 müssen die Bonbons 205 daher noch um 90° bei gleichzeitiger Erfassung durch die Haltebackenpaare 104 gedreht werden. Vorzugsweise erfolgt diese Rotationsbewegung erst am Ende, d.h. gemeinsam mit einer opponierenden Axialbewegung der Haltebackenpaare 104 zur Freigabe des Bonbons 205 an das Stapelband 301 des Stapelbandförderes 3, so daß die Haltebackenpaare 104 nicht nur einer Axialbewegung unterliegen, sondern diese zugleich von einer Drehbewegung der Haltebackenpaare 104 überlagert wird, zur Rotation der Bonbons 205 in die Hochkantposition.

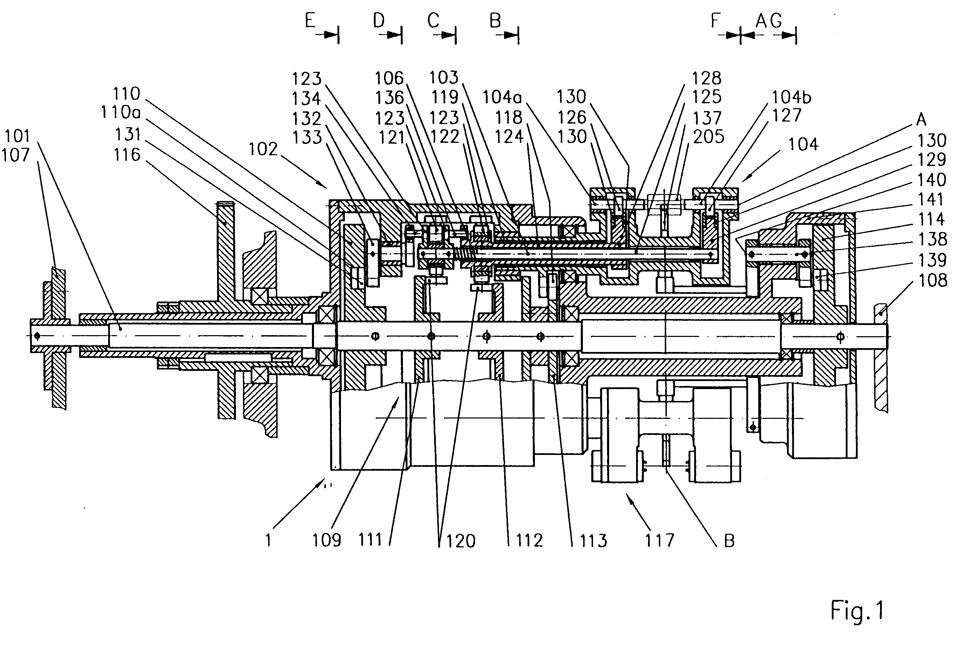

Nachstehend wird der konstruktive Aufbau des Übergabekopfes 1 mit der Einrichtung zur Rotation der Haltebackenpaare 104 anhand der Fig. 1 - 9 genauer erläutert.

Der Übergabekopf 1 weist die zentrale, stationäre, gleichwohl in Umfangsrichtung insbesondere um 180° verdrehbare Achse 101 auf, die sich zwischen einem stationären Gehäuse 107 und einer Lagerplatte 108 erstreckt. Auf der stationären Achse 101 ist, drehfest mit der Achse 101 verbunden, eine Steuerkurvenanordnung 109 als Teil einer Bewegungssteuereinrichtung für die Haltebackenpaare 104 fixiert. Diese Steuerkurvenanordnung 109 besteht aus einer Mehrzahl von auf der stationären Achse 101 abfolgend angeordneten Kurvenscheiben 110, 111, 112, 113, 114. Sie sind gemeinsam mit der stationären Achse 106 vorzugsweise um ein 180° schwenkbar, um eine Änderung des Bewegungsmusters für eine Drehbewegung der einzelnen Haltebackenpaare 104 einzurichten, wie nachfolgend noch erläutert werden wird.

Alternativ könnten die Kurvenscheiben 110 - 114 auch baulich vereinigt oder aber separat über z.B. eine gemeinsame Stellhülse, die drehbar auf der stationären Achse 106 aufgenommen ist, gegenüber dieser um einen bestimmten Winkel einstellbar sein.

Auf der stationären Achse 101 ist zur Rotation ein Grundgehäuse 102 drehbar gelagert, das über ein Antriebsstirnrad 116 angetrieben wird, wobei die Antriebsvorrichtung hier nicht im einzelnen dargestellt ist.

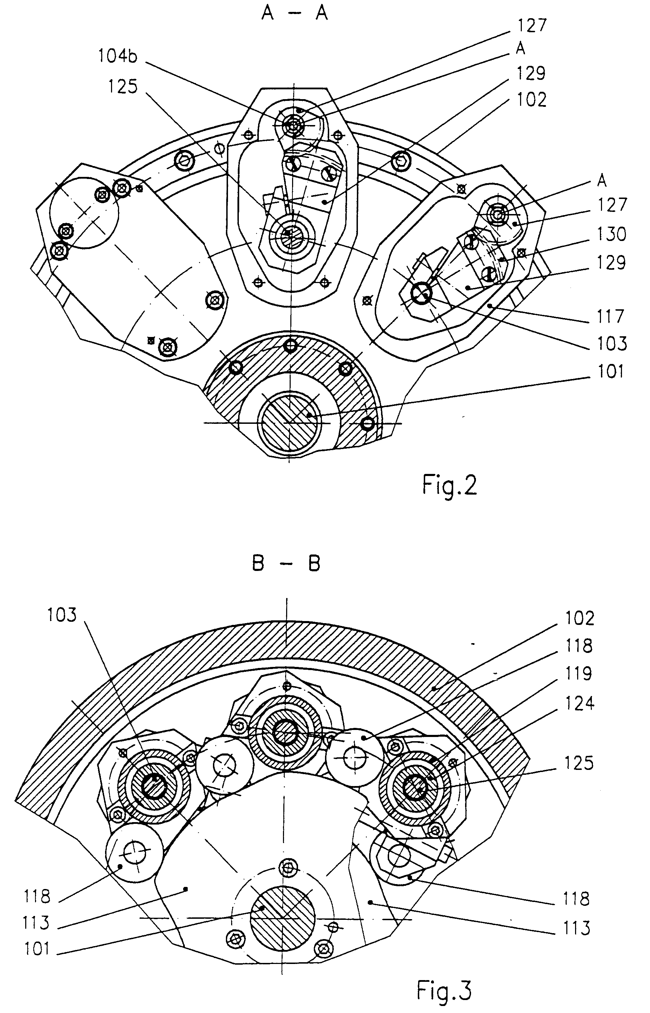

Durch in Umfangsrichtung abfolgend in dem Grundgehäuse 102 drehbar gelagerte Wellen 125 für jedes Haltebackenpaar 104 werden die Schwenkachsen 103 für die Haltebackenpaare 104 bestimmt, die in den um diese Schwenkachsen 103 schwenkbaren Schwenkgehäusen 117 aufgenommen sind. Die Schwenkbewegung der Schwenkgehäuse 117 zur Anpassung der Übergabegeschwindigkeit von der Umfangsgeschwindigkeit des Übergabekopfes 1 zu der ca. 1/3 dieser Umfangsgeschwindigkeit betragenden Fördergeschwindigkeit des Stapelbandes 301 erfolgt über die Doppel-Kurvenscheibe 113 mit der über Steuerrollenpaare 118 die am Umfang der Doppel-Kurvenscheibe 113 abrollen (s. Schnitt B-B gem. Fig. 3) und die Steuerbewegung auf einen rohrförmigen Gehäuseansatz 119 des Schwenkgehäuses 117 überträgt.

In einem nach außen radial vorspringenden Teil des gabelförmigen Schwenkgehäuses 117 ist opponierend jeweils ein Haltebackenpaar 104 mit den Haltebacken 104a, 104b gelagert, wobei jede Haltebacke 104a, 104b axial beweglich ist, um das Bonbon 205 an gegenüberliegenden Flächen andrückend unter Kraftschluß und Verspannung durch eine Feder 106 zu ergreifen oder freizugeben.

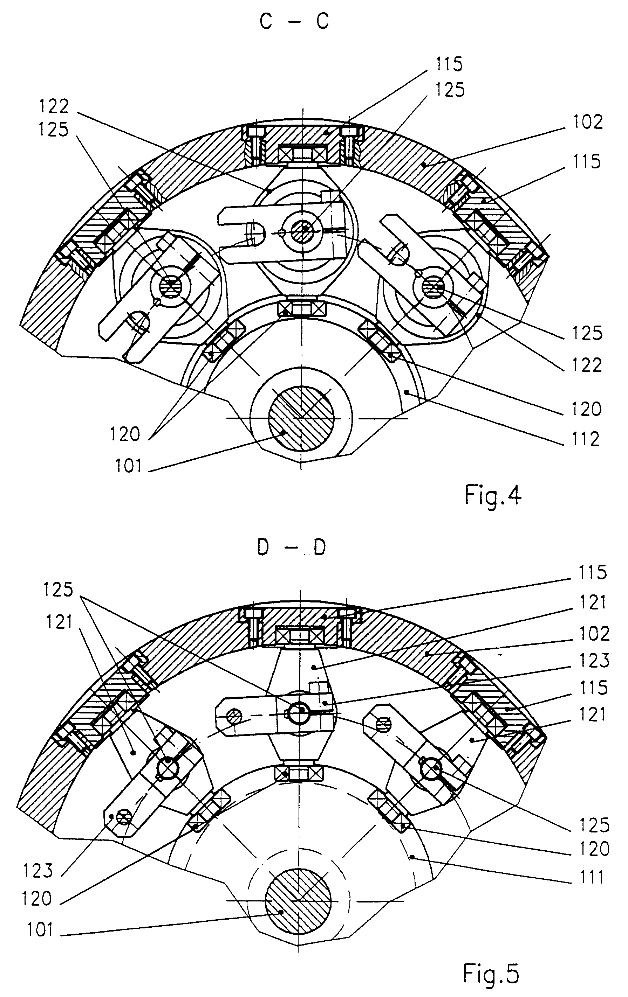

Zusätzlich sind die Haltebacken 104a, 104b aber auch um eine Haltebackenachse A drehbar, um das ergriffene Bonbon 205 (oder einen anderen Gegenstand, der gerade verarbeitet wird) in einer gegenüber der Aufnahmeposition vorzugsweise um 90° gedrehten Position (z.B. hochkant nach Flachaufnahme) weiterzugeben. Die Bewegungssteuereinrichtung für jedes Haltebackenpaar 104, die den Haltebacken 104a, 104b sowohl eine opponierende Axialbewegung als auch eine Drehbewegung um ihre Haltebackenachse A verleiht, weisen die Kurvenscheiben 110, 111, 112 auf, wobei die Kurvenscheiben 111 und 112 die Axialbewegung der äußeren Haltebacke 104b (Kurvenscheibe 111) bzw. die Axialbewegung der inneren Haltebacke 104a (Kurvenscheibe 112) steuern. Erläuternd wird hierzu auch auf die zusätzlichen Schnittdarstellungen C-C, D-D, E-E gemäß den Fig. 4, 5 und 6 verwiesen. Mit den Kurvenscheiben 111, 112, die jeweils als Stirnkurven (äußerer Lagerring) ausgebildet sind, ist hierzu jeweils eine Steuerrolle 120 eines Kurvenhebels 121, 122 in Eingriff, wobei der Kurvenhebel 121 mit radialen Führungskörpern 123, die drehfest mit der Welle 125 verbunden sind, umgeben ist, um einerseits die Übertragung der von der Steuerrolle 120 aufgenommenen Axialbewegung auf die Welle 125 und andererseits auch die Übertragung einer Schwenkbewegung auf diese Welle 125 zu gestatten, wobei der Kurvenhebel 121 selbst drehbar auf der Welle 125 und über ein Einsatzstück 115 auch drehbar (äußerer Lagerring) im Außenumfangsbereich des rotierenden Grundgehäuses 102 gelagert ist.

Die Steuerung der Axialbewegung für die innere Haltebacke 104a erfolgt über die Steuerrolle des ebenfalls durch radiale Führungskörper 123 radial geführten Kurvenhebels 122 auf die Hülse 124, mit der die radialen Führungskörper 123 drehfest verbunden sind, wobei die Hülse 124 mit der inneren Haltebacke 104a zur Übertragung der Axialbewegung von der Hülse 124 auf diese Haltebacke 104a direkt verbunden ist. Auch der Kurvenhebel 122 ist mit seinem anderen Ende in Einsatzstücken 115 des Grundgehäuses 102 drehbar gelagert.

Um für die mit dem Schwenkgehäuse 117 um die Schwenkachse 103 in einer Taumel- oder Pendelbewegung (s. Fig. 10) verschwenkbaren Haltebackenpaare 104 auch noch zusätzlich mit einer Drehbewegung um die Haltebackenachse A auszurüsten, zur gegenüber einer Aufnahmeposition von dem vorgeschalteten Packkopf 1 z.B. um 90° verdrehten Abgabeposition für die Bonbons 205 ist jede Haltebacke 104a, 104b einstückig mit einem Zahnsegment 126, 127 versehen, das in Kämmeingriff mit GegenZahnseg-menten 128, 129 ist, die einmal drehfest für die äußere Haltebacke 104b auf der Welle 125 bzw. für die innere Haltebacke 104a auf der Hülse 124 aufgenommen sind. Da diese Gegen-Zahnsegmente 128, 129 auch die opponierende Axialbewegung auf die Haltebacken 104a, 104b übertragen müssen, ist der Verzahnungseingriff zwischen den Zahnsegmenten 126, 127 und den Gegen-Zahnsegmenten 128, 129 zwischen Überdeckungsplatten 130, käfigartig eingefangen, die an den Gegen-Zahnsegmenten befestigt sind, wie dies insbesondere aus den Fig. 2 (Schnitt bei abgenommenen Schwenkgehäusedeckeln) und 9 deutlich ist.

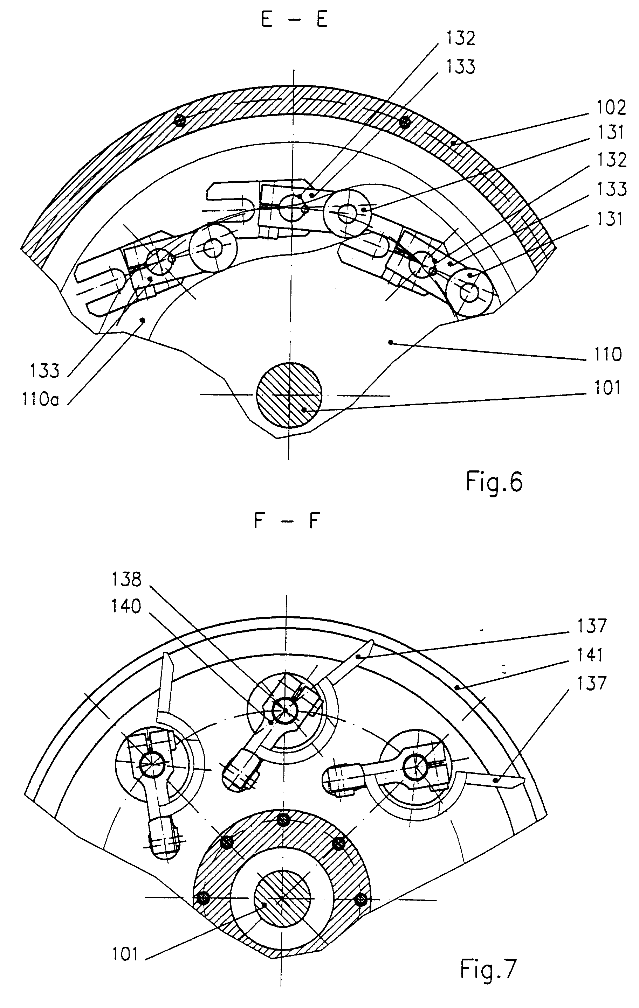

Zur Ableitung dieser Drehbewegung der einzelnen Haltebacken 104a, 104b um die Haltebackenachse A ist die Kurvenscheibe 110 vorgesehen, in deren Nutkurve 110a (Fig. 6) über eine Steuerrolle 131 ein bei 132 im Grundgehäuse 102 schwenkbar gelagerter Antriebshebel 133 angreift, dessen Drehbewegung über Hebelglieder 134 auf den Führungskörper 123 zur Schwenkbewegung der Welle 125 übertragen wird, während die gleiche Drehbewegung über den weiteren Führungskörper 123 und ein Koppelglied 136 auf die Hülse 124 und damit auf das Gegen-Zahnsegment 128 übertragen wird.

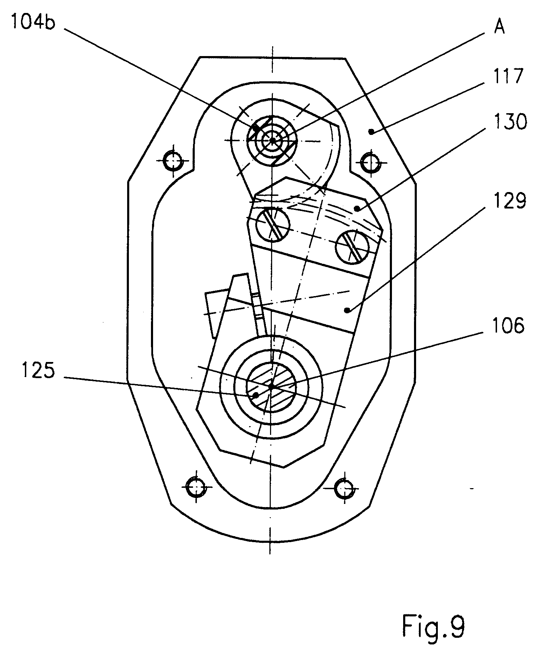

Die Teilschnitt-Darstellung nach Fig. 9 (bei abgenommenen Schwenkgehäuse-Deckel) verdeutlicht nochmals die den Haltebacken 104a, 104b des Übergabekopfes 1 zusätzlich verliehenen Freiheitsgrad und zeigt die Übertragungselemente für die Übertragung einer zusätzlichen Drehbewegung, hier auf die außenliegende Haltebacke 104b um die Haltebackenachse A, wobei ersichtlich ist, daß durch integrale Verbindung des Zahnsegmentes 127 mit der Haltebacke 104b dieser durch Kämmeingriff mit dem Gegen-Zahnsegment 129 eine Drehbewegung um die Haltebackenachse A verliehen werden kann, bei Verdrehung der Welle 125, mit der das Gegen-Zahnsegment 129 fest verbunden ist. Hierdurch ist die besondere Eignung des Übergabekopfes als Vorschaltglied zu einem Stapelbandförderer 3 begründet, da es möglich ist, wechselnden Anforderungen an die Orientierung des entsprechenden Artikels, hier Bonbons 205, zu entsprechen.

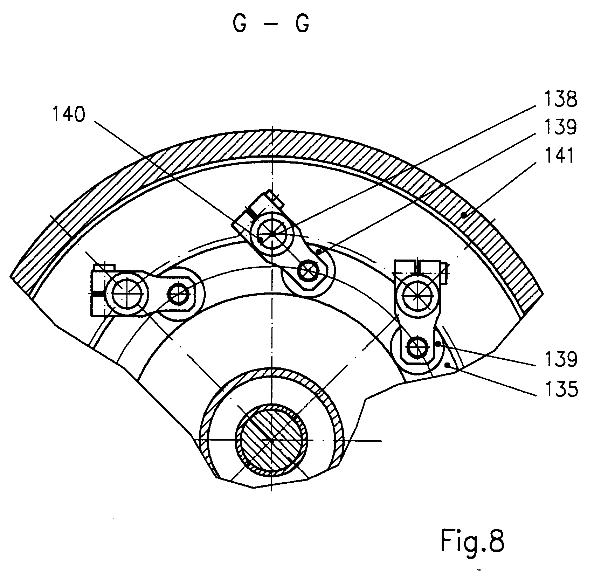

Zur Stabilisierung der Übertragung des entsprechenden Artikels, hier Bonbons 205, um dem Übergabekopf 1 zu dem Stapelbandförderer 3, insbesondere für ein sicheres Abgeben des Bonbons 205 von dem jeweiligen Haltebackenpaar 104 in den zwischen dem Stapelband 301 und dem Gegenlager 304 gebildeten Zwischenraum ist für jedes Schwenkgehäuse 117 ein Haltefinger 137 in einer mittleren Radialebene B zwischen beiden Haltebacken 104a, 104b, praktisch in Anlage oder unmittelbar benachbart zu dem jeweiligen Artikel, hier Bonbon 205, vorgesehen, der der zuverlässigen Abstützung und Übergabe des Bonbons 205 von dem Übergabekopf 1 auf die Nachfolgeeinrichtung, hier das Stapelband 301 des Stapelbandförderers 3 unterstützt. Eine Drehachse 138 stimmt mit derjenigen Drehachse 103 für das zugehörige Schwenkgehäuse 117 überein, wobei die Synchronbewegung des Haltefingers 137 zu der Bewegung des Schwenkgehäuses 117 von der drehfest mit der stationären Achse 101 verbundenen Kurvenscheibe 114 über eine Nutkurve 135 und eine Steuerrolle 139 über entsprechende Übertragungsglieder 140, die drehbar in dem Haltefinger-Gehäuse 141 gelagert sind, erfolgt (s. Fig. 8). In die Schnittdarstellung F-F gem. Fig. 7 (Ansicht auf das Haltefinger-Gehäuse 141) ist zusätzlich jeweils der Haltefinger 137 eingezeichnet.

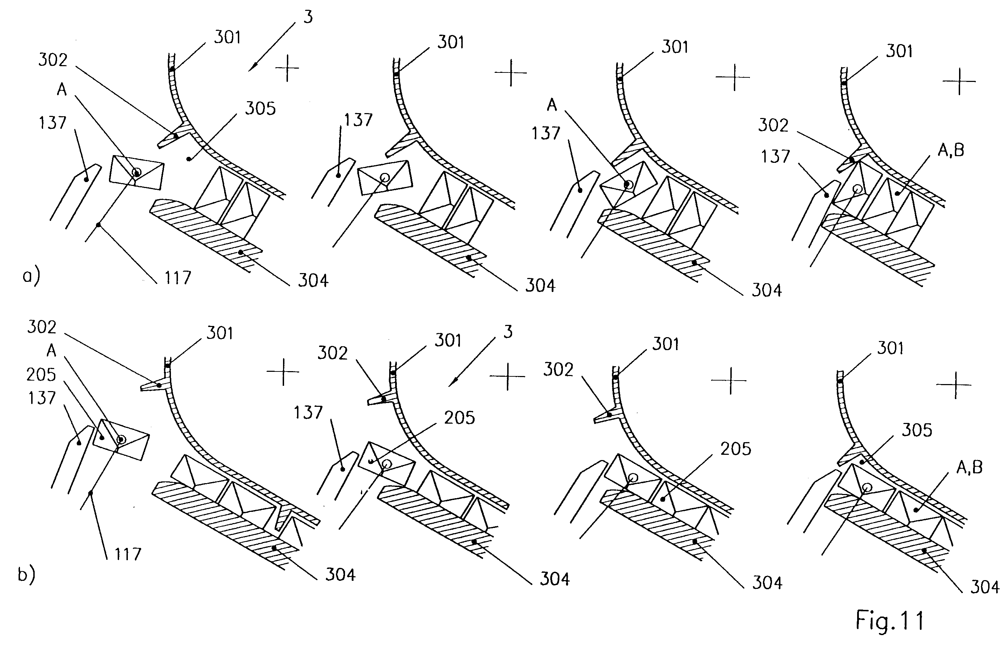

In den Fig. 11a und 11b ist schematisch das Übergeben der einzelverpackten Bonbons (205) von dem Übergabekopf 1 für ein Haltebackenpaar schematisch dargestellt, und zwar in Fig. 11a für die Bildung von Gruppen zur Hochkantpackung und in Fig. 11b zur Bildung von Gruppen in Flachpackung, wobei insbesondere für Fig. 11a deutlich ist, daß die Drehbewegung der Haltebacken 104a, 104b um die Haltebackenachse A im Bereich der Übergabe an den Stapelbandförderer 3, d.h. unter Überlagerung der Schwenkbewegung, die die Haltebacken 104a, 104b mit dem Schwenkgehäuse 117 ausführen, erfolgt. Das Gegenlager 304 hat eine Einführungsschräge 304a und der Haltefinger 137 steht gegebenenfalls unterstützend für den Übergabeprozeß bereit.

Durch den Mitnehmer 302 wird die Gruppe A, B dann jeweils entlang des Gegenhalters in einem so gebildeten Packfach 305 weggefördert.

Auf diese Weise ist für kleinstückiges Gut ein rotierendes Transportmittel geschaffen, das im Hochleistungsbereich, z.B. für die Abförderung mit einer Geschwindigkeit von ca. 1.500 Stück pro Minute, bzw. ca. 500 Gruppen pro Minute, äußerst zuverlässig arbeiten und überdies auf seinem Transportweg, insbesondere bei gleichzeitiger Abgabe des transportierten Artikels eine Veränderung der Winkellage des Gegenstandes zwischen Erfassungsposition von einer stromaufliegenden Vorrichtung zu einer Abgabeposition an eine stromabliegende Vorrichtung gestattet.

Eine derartige Ausbildung ist nicht auf einen Übergabekopf als Aufgabeeinrichtung auf einen Stapelbandförderer, der einzeln verpackte Gegenstände zu Gruppen zusammenordnet, beschränkt, vielmehr können auf diese Weise auch bisher nicht verpackte Einzelgenstände transportiert werden und ein entsprechender Übergabekopf oder Greiferrad auch an anderen Stellen einer solchen, auf dem "Rotationsprinzip" beruhenden Verpackungsmaschinen eingesetzt werden.

## Patentansprüche

1. Rotations-Transportvorrichtung zur Weitergabe von kleinstückigen Gegenständen für Verpackungsmaschinen, mit einem um eine stationäre Achse (101) rotierbaren Grundgehäuse (102), das eine Mehrzahl von Haltebackenpaaren (104) zur Aufnahme des Gegenstandes zwischen opponierend entlang einer Haltebackenachse (A) bewegbaren Haltebacken (104a, 104b) eines Haltebackenpaares (104) trägt, wobei jedes Haltebackenpaar (104) um eine im wesentlichen parallel zur stationären Achse (101 verlaufende Schwenkachse (103) schwenkbar und eine Bewegungssteuereinrichtung für die Haltebackenpaare (104) in Verbindung mit einer stationären, auf der Achse (101) aufgenommenen Steuerkurvenanordnung (109) vorgesehen ist, **dadurch gekennzeichnet,** daß zumindest eine Haltebacke (104a, 104b) jedes Haltebackenpaares (104) relativ zu der Schwenkachse (103) um die Haltebackenachse (A) drehbar ist.

2. Rotations-Transportvorrichtung nach Anspruch 1, **dadurch gekennzeichnet,** daß die Haltebacken (104a, 104b) mit einem Zahnsegment (126, 127) drehfest verbunden und mit diesem Zahnsegment (126, 127) ein Gegen-Zahnsegment (128, 129) der Bewegungssteuereinrichtung in Kämmeingriff ist.

3. Rotations-Transportvorrichtung nach Anspruch 1 oder 2, **dadurch gekennzeichnet,** daß das Grundgehäuse (102) eine Mehrzahl von um die jeweilige Schwenkachse (103) schwenkbaren Schwenkgehäuse (117) lagert, in denen beiderseits einer Radialebene (B) je eine Haltebacke (104a, 104b) eines Haltebacken paares (104) um die Haltebackenachse (A) drehbar gelagert ist.

4. Rotations-Transportvorrichtung nach zumindest einem der vorhergehenden Ansprüche 1 bis 3, **dadurch gekennzeichnet,** daß die Haltebacken (104a, 104b) Zylinderkörper mit einem integralen Zahnsegment (126, 127) sind.

5. Rotations-Transportvorrichtung nach zumindest einem der vorhergehenden Ansprüche 2 bis 4, **dadurch gekennzeichnet,** daß für jedes Haltebackenpaar (104) ein Paar axial beabstandeter Gegen-Zahnsegmente (128, 129) in Kämmeingriff mit den Zahnsegmenten (126, 127) des Haltebackenpaares (104) vorgesehen und die Gegen-Zahnsegmente (128, 129) um die Schwenkachse (103) schwenkbar sind.

6. Rotations-Transportvorrichtung nach zumindest einem der vorhergehenden Ansprüche 1 bis 5, **dadurch gekennzeichnet,** daß die Schwenkachse (103) durch eine Welle (125) gebildet ist, auf der ein Gegen-Zahnsegment (129) drehfest zum Eingriff mit dem Zahnsegment (127) der einen Haltebacke (104b) aufgenommen ist während das andere Gegen-Zahnsegment (128) zum Eingriff mit dem Zahnsegment (126) der anderen Haltebacke (104a) des Haltebackenpaares (104) drehfest mit einer die Welle (125) konzentrisch umgebenden Hülse (124) verbunden ist.

7. Rotations-Transportvorrichtung nach zumindest einem der vorhergehenden Ansprüche 1 bis 6, **dadurch gekennzeichnet,** daß die Haltebacken (104a, 104b) mit den Zahnsegmenten (126, 127) in dem Schwenkgehäuse (117) axial verschiebbar und federelastisch vorgespannt sind.

8. Rotations-Transportvorrichtung nach zumindest einem der vorhergehenden Ansprüche 1 bis 7, **dadurch gekennzeichnet,** daß die stationäre Achse (106) mit der Steuerkurvenanordnung (109) der Bewegungssteuereinrichtung um 180° verdrehbar ist.

9. Rotations-Transportvorrichtung nach zumindest einem der vorhergehenden Ansprüche 1 bis 8, **dadurch gekennzeichnet,** daß die Steuerkurvenanordnung (109) eine Mehrzahl von drehfest mit der stationären Achse (106) verbundenen Kurvenscheiben (110 bis 114) aufweist.

10. Rotations-Transportvorrichtung nach zumindest einem der vorhergehenden Ansprüche 1 bis 9, **dadurch gekennzeichnet,** daß eine axiale Verschiebung der Haltebacken (104a, 104b) von je einer Stirn-Kurvenscheibe (111, 112) über schwenkbar aber in ihrer Axialposition auf der Welle (125) fixierte Hebel (121, 122) und eine, der axialen Verschiebung, insbesondere überlagerte Drehbewegung der Haltebacken (104a, 104b) um die Haltebackenachse (A) von einer Nutkurve (110a) über einen drehbar gelagerten Antriebshebel (132) von einer weiteren Kurvenscheibe (110) steuerbar ist.

11. Rotations-Transportvorrichtung nach zumindest einem der vorhergehenden Ansprüche 1 bis 10, **dadurch gekennzeichnet,** daß für jedes Schwenkgehäuse (117) ein Haltefinger (137) zur Abstützung des Gegenstandes (205), insbesondere bei der Übergabe des Gegenstandes (205) zu einer nachgeordneten Einrichtung (3) vorgesehen ist.

12. Rotations-Transportvorrichtung nach Ansprüchen 3 und 11, dadurch gekennzeichnet, daß der Haltefinger (137) im Bereich der Radialebene (B) angeordnet ist.

13. Rotations-Transportvorrichtung nach Anspruch 12, **dadurch gekennzeichnet,** daß der Haltefinger (137) zur Synchronbewegung mit dem Schwenkgehäuse (117) durch eine Nutkurve (135) und eine Steuerrolle (139) über einen drehbar gelagerten Hebel (138) steuerbar ist.

14. Rotations-Transportvorrichtung nach zumindest einem der vorhergehenden Ansprüche 11 bis 13, **dadurch gekennzeichnet,** daß ein mit dem Grundgehäuse (102) umlaufendes Haltefinger-Gehäuse (141) für einen Antrieb des Haltefingers (137) gegenüberliegend zu dem die Bewegungssteuereinrichtung für die Haltebackenpaare (104) aufnehmenden Grundgehäuse (102), mit dem Schwenkgehäuse (17) zwischen Grundgehäuse (115) und Haltefinger-Gehäuse (141), angeordnet ist.

15. Rotations-Transportvorrichtung nach zumindest einem der vorhergehenden Ansprüche 1 bis 14, **dadurch gekennzeichnet,** daß diese einen Übergabekopf (1) zur Aufnahme verpackter, einzelner Gegenstände (205) von einem vorgeschalteten Packkopf (2) und zur, insbesondere um 90° gegenüber einer Aufnahmeposition verdrehten, Übergabe der Gegenstände (205) zu einem die einzelnen Gegenstände (205) zu Gruppen zusammenordnenden Stapelförderer (3) darstellt.

## Claims

1. Rotary transport device for the transfer of small-sized articles for packaging machines, with a basic housing (102), which is rotatable about a stationary axle (101) and carries a plurality of retaining jaw pairs (104) for the reception of the article between two retaining jaws (104a, 104b), which are movable oppositely along a retaining jaw axle (A), of a retaining jaw pair (104), wherein each retaining jaw pair (104) is pivotable about a pivot axle (103) extending substantially parallelly to the stationary axle (101) and a movement control equipment for the retaining jaw pairs (104) is provided in conjunction with a stationary control cam arrangement (109) received on the axle (101), characterised thereby, that at least one retaining jaw (104a, 104b) of each retaining jaw pair (104) is rotatable about the retaining jaw axle (A) relative to the pivot axle (103).

2. Rotary transport device according to claim 1, characterised thereby, that the retaining jaws (104a, 104b) are connected with a toothed segment (126, 127) to be secure against relative rotation and a counter-toothed segment (128, 129) of the movement control equipment is in meshing engagement with this toothed segment (126, 127).

3. Rotary transport device according to claim 1 or 2, characterised thereby, that the basic housing (102) bears a plurality of pivot housings (117), which are pivotable about the respective pivot axle (103) and in which, at each side of a radial plane (B), a respective retaining jaw (104a, 104b) of a retaining jaw pair (104) is borne to be rotatable about the retaining jaw axle (A).

4. Rotary transport device according to at least one of the preceding claims 1 to 3, characterised thereby, that the retaining jaws (104a, 104b) are cylindrical bodies with an integral toothed segment (126, 127).

5. Rotary transport device according to at least one of the preceding claims 2 to 4, characterised thereby, that for each retaining jaw pair (104), a pair of axially spaced counter-toothed segments (128, 129) is provided in meshing engagement with the toothed segments (126, 127) of the retaining jaw pair (104) and the counter-toothed segments (128, 129) are pivotable about the pivot axle (103).

6. Rotary transport device according to at least one of the preceding claims 1 to 5, characterised thereby, that the pivot axle (103) is formed by a shaft (125), on which a counter-toothed segment (129) is received to be secure against relative rotation for engagement with the toothed segment (127) of the one retaining jaw (104b), whilst the other counter-toothed segment is, for engagement with the toothed segment (126) of the other retaining jaw (104a), connected to be secure against relative rotation with a sleeve (124) concentrically surrounding the shaft (125).

7. Rotary transport device according to at least one of the preceding claims 1 to 6, characterised thereby, that the retaining jaws (104a, 104b) with the toothed segments (126, 127) are axially displaceable and resiliently biased in the pivot housing (117).

8. Rotary transport device according to at least one of the preceding claims 1 to 7, characterised thereby, that the stationary axle (106) with the cam control arrangement (109) of the movement control equipment is rotatable through 180°.

9. Rotary transport device according to at least one of the preceding claims 1 to 8, characterised thereby, that the cam control arrangement (109) comprises a plurality of cam discs (110 to 114) connected to be secure against relative rotation with the stationary axle (106).

10. Rotary transport device according to at least one of the preceding claims 1 to 9, characterised thereby, that an axial displacement of the retaining jaws (104a, 104b) from a respective end face cam disc (111, 112) is controllable by way of levers (121, 122), which are pivotable, but fixed in their axial position on the shaft (125) and a rotational movement, in particular one superimposed on the axial displacement, of the retaining jaws (104a, 104b) about the retaining jaw axle (A) is controllable by a groove cam (110a) of a further cam disc (110) by way of a drive lever (132) borne to be rotatable.

11. Rotary transport device according to at least one of the preceding claims 1 to 10, characterised thereby, that a retaining finger (137) for the support of the article (205), in particular during the transfer of the article (205) to a downstream equipment (3), is provided for each pivot housing (117).

12. Rotary transport device according to claims 3 and 11, characterised thereby, that the retaining finger (137) is arranged in the region of the radial plane (B).

13. Rotary transport device according to claim 12, characterised thereby, that the retaining finger (137) is, for synchronous movement with the pivot housing (117), controllable by a groove cam (135) and a control roller (139) by way of a lever (138) borne to be rotatable.

14. Rotary transport device according to at least one of the preceding claims 11 to 13, characterised thereby, that a retaining finger housing (141) revolving with the basic housing (102) is arranged for a drive of the retaining finger (137) to lie opposite to the basic housing (102), which receives the movement control equipment for the retaining jaw pairs (104), with the pivot housing (117) between the basic housing (115) and the retaining finger housing (141).

15. Rotary transport device according to at least one of the preceding claims 1 to 14, characterised thereby, that this represents a transfer head (1) for the reception of individual packaged articles (205) from an upstream packaging head (2) and for the transfer, in particular turned through 90° relative to a receiving position, of the articles (205) to a stacking conveyor (3) ordering the individual articles (205) together into groups.

## Revendications

1. Dispositif de transport rotatif pour le transfert d'articles en petits morceaux pour des machines d'emballage, comprenant un logement de base (102) pouvant tourner autour d'un axe fixe (101) et portant plusieurs paires de mâchoires de maintien (104) servant à tenir l'objet entre des mâchoires de maintien (104a, 104b) d'une paire de mâchoires de maintien (104) qui peuvent se déplacer dans des sens opposés le long d'un axe (A) des mâchoires de maintien, chaque paire de mâchoires de maintien (104) pouvant pivoter autour d'un axe de pivotement (103) s'étendant de manière essentiellement parallèle à l'axe fixe (101), et un dispositif de commande de déplacement pour les paires de mâchoires de maintien (104) étant prévu en liaison avec un dispositif à came de commande (109) fixe situé sur l'axe (101), caractérisé en ce qu'au moins une mâchoire de maintien (104a, 104b) de chaque paire de mâchoires de maintien (104) peut tourner, par rapport à l'axe de pivotement (103), autour de l'axe (A) des mâchoires de maintien.

2. Dispositif de transport rotatif selon la revendication 1, caractérisé en ce que les mâchoires de maintien (104a, 104b) sont reliées à un segment denté (126, 127) d'une manière empêchant la rotation et un segment denté antagoniste (128, 129) du dispositif de commande de déplacement est enclenché par engrènement avec ce segment denté (126, 127).

3. Dispositif de transport rotatif selon l'une des revendications 1 ou 2, caractérisé en ce que le logement de base (102) contient plusieurs logements pivotants (117) qui peuvent pivoter autour de l'axe de pivotement respectif (103) et dans lesquels est montée, sur chacun des deux côtés d'un plan radial (B) et de manière rotative autour de l'axe (A) des mâchoires de maintien, une mâchoire de maintien (104a, 104b) d'une paire de mâchoires de maintien (104).

4. Dispositif de transport rotatif selon au moins une des revendications précédentes 1 à 3, caractérisé en ce que les mâchoires de maintien (104a, 104b) sont des corps cylindriques pourvus d'un segment denté solidaire (126, 127).

5. Dispositif de transport rotatif selon au moins une des revendications précédentes 2 à 4, caractérisé en ce que, pour chaque paire de mâchoires de maintien (104), on prévoit une paire de segments dentés antagonistes (128, 129) situés à une distance axiale et enclenchés par engrènement avec les segments dentés (126, 127) de la paire de mâchoires de maintien (104), et les segments dentés antagonistes (128, 129) peuvent pivoter autour de l'axe de pivotement (103).

6. Dispositif de transport rotatif selon au moins une des revendications précédentes 1 à 5, caractérisé en ce que l'axe de pivotement (103) est formé par un arbre (125) qui porte un segment denté antagoniste (129) d'une manière empêchant la rotation en vue de l'enclenchement avec le segment denté (127) de l'une des mâchoires de maintien (104b), tandis que l'autre segment denté antagoniste (128) destiné à s'enclencher avec le segment denté (126) de l'autre mâchoire de maintien (104a) de la paire de mâchoires de maintien (104) est relié d'une manière empêchant la rotation à une douille (124) entourant l'arbre (125) de manière concentrique.

7. Dispositif de transport rotatif selon au moins une des revendications précédentes 1 à 6, caractérisé en ce que les mâchoires de maintien (104a, 104b) avec les segments dentés (126, 127) sont précontraintes dans le boîtier pivotant (117) d'une manière élastique et permettant un déplacement axial.

8. Dispositif de transport rotatif selon au moins une des revendications précédentes 1 à 7, caractérisé en ce que l'axe fixe (106) peut subir une rotation à 180° avec le dispositif à came de commande (109) du dispositif de commande de déplacement.

9. Dispositif de transport rotatif selon au moins une des revendications précédentes 1 à 8, caractérisé en ce que le dispositif à came de commande (109) comprend plusieurs disques à came (110 à 114) reliés à l'axe fixe (106) d'une manière empêchant la rotation.

10. Dispositif de transport rotatif selon au moins une des revendications précédentes 1 à 9, caractérisé en ce qu'un déplacement axial des mâchoires de maintien (104a, 104b) peut être commandé par un disque à came frontal (111, 112) respectif par le biais de leviers (121, 122) pivotants mais dont la position axiale sur l'arbre est fixe (125), et un mouvement rotatif, notamment un mouvement superposé au déplacement axial, des mâchoires de maintien (104a, 104b) autour de l'axe (A) des mâchoires de maintien peut être commandé, par une came à rainure (110a) et par le biais d'un levier de commande (132) monté de manière rotative, par un autre disque à came (110).

11. Dispositif de transport rotatif selon au moins une des revendications précédentes 1 à 10, caractérisé en ce que, pour chaque logement pivotant (117), on prévoit un doigt de maintien (137) servant à l'appui de l'article (205), notamment lors du transfert de l'article (205) vers un dispositif (3) situé en aval.

12. Dispositif de transport rotatif selon les revendications 3 et 11, caractérisé en ce que le doigt de maintien (137) est situé dans la région du plan radial (B).

13. Dispositif de transport rotatif selon la revendication 12, caractérisé en ce que le doigt de maintien (137) peut être commandé par une came à rainure (135) et un galet de commande (139) par le biais d'un levier (138) monté de manière rotative, afin d'obtenir une synchronisation du mouvement avec le logement pivotant (117).

14. Dispositif de transport rotatif selon au moins une des revendications précédentes 11 à 13, caractérisé en ce qu'un logement (141) pour les doigts de maintien prévu pour une commande du doigt de maintien (137) et tournant avec le logement de base (102) est situé en face du logement de base (102) contenant le dispositif de commande de déplacement pour les paires de mâchoires de maintien (104), le logement pivotant (17) se trouvant entre le logement de base (115) et le logement (141) pour les doigts de maintien.

15. Dispositif de transport rotatif selon au moins une des revendications précédentes 1 à 14, caractérisé en ce que ce dispositif représente une tête de transfert (1) servant à recevoir des articles individuels emballés (205) d'une tête de saisie (2) située en amont et servant à transférer, notamment avec une rotation de 90° par rapport à une position de réception, les articles (205) vers un transporteur gerbeur (3) ordonnant les articles individuels (205) en groupes.
